# EUROPÄISCHE PATENTSCHRIFT

(11) **EP 1 376 067 B1**
(45) Veröffentlichungstag und Bekanntmachung des Hinweises auf die Patenterteilung: **02.08.2006**
(21) Anmeldenummer: 03013508.1
(22) Anmeldetag: 13.06.2003
(51) Int. Cl.: G01D 11/16, G01D 11/30, F16B 2/00, F16B 37/04

(54) **Vorrichtung zur Befestigung eines Sensors in einer Nut**
Arrangement for fixing a sensor in a groove
Assemblage pour fixer un capteur dans une rainure

(30) Priorität: 19.06.2002 DE 10227333
(43) Veröffentlichungstag der Anmeldung: 02.01.2004
(73) Patentinhaber: Bosch Rexroth AG, 70184 Stuttgart (DE)
(72) Erfinder: Däberitz, Günter, Dipl.-Ing., 71634 Ludwigsburg (DE)
(74) Vertreter: Maiwald Patentanwalts GmbH

(56) Entgegenhaltungen:
- DE-U- 20 107 238
- DE-U- 29 812 609
- FR-A- 2 604 759
- JP-A- 7 270 196
- US-A- 2 684 703
- US-A- 4 125 140
- US-A- 5 503 511

## Beschreibung

Die Erfindung betrifft einen Sensor mit Gehäuse und Mitteln zur Fixierung des Gehäuses in einer Nut eines Bauteils.

Derartige Sensoren kommen üblicherweise in der Automatisierungstechnik bzw. in Pneumatik- und Hydraulikanlagen zum Einsatz. Hier werden diese Sensoren vorzugsweise eingesetzt, um die Positionen verfahrbarer Maschinenelemente zu erfassen und entsprechende Signale an Steuerungseinheiten weiterzugeben. Insbesondere finden solche Sensoren Anwendung bei Bauteilen, wie Pneumatik- oder Hydraulikzylindern sowie bei Linearführungseinheiten. Die Sensoren werden üblicherweise in Nuten geführt und nach entsprechender Längsausrichtung innerhalb der Nut fixiert.

DE 201 07 238 U beschreibt einen Sensor mit Gehäuse nach dem Oberbegriff des Anspruch 1.

Aus DE 298 12 609 U ist ein Sensor bekannt. Das Befestigungssystem des Sensors weist hierbei einen Federbereich auf, welcher ein Zuführen des Sensors in die Nut quer zur Längsachse der Nut durch elastische Deformation ermöglicht. Dabei wird der Sensor in die Nut über eine Kippbewegung zugeführt. Bei dieser Kippbewegung wird der Federbereich in dem Bereich des Nuthalses komprimiert und bei Erreichen des weiteren Bereichs der Nut expandiert. Der Federbereich weist eine spezielle Ausformung in Form einer Nase auf, durch welche der Sensor in der Nut einrastet. Ein kombiniertes Verstell-/Arretierelement verhindert das erneute Komprimieren des Federbereichs und damit das Lösen des Sensors aus der gewünschten Nutposition. Zudem presst es den Sensor von dem Nutgrund gegen eine Schulter der Nut.

Bei der bekannten Lösung tritt der Nachteil auf, dass, sobald der Sensor in die Nut zugeführt wurde, ein Verschieben aufgrund der Federkraft des Federbereichs nur erschwert möglich ist. Weiterhin wird die Halte- bzw. Klemmkraft, die zur Fixierung des Sensors benötigt wird, im Wesentlichen an den Nutschultern erzeugt, welche im Vergleich zum Beispiel mit dem Nutgrund nur eine geringe Fläche zur Klemmung darstellen. Weiterhin nachteilig ist, dass das kombinierte Verstell-/Arretierelement direkt den Nutgrund kontaktiert und dort eine Kraft überträgt. Der Nutgrund stellt zugleich die Lauffläche für den Sensor in der Nut dar. Durch die Kraftübertragung über das Verstell-/Arretierelement kommt es dort im Extremfall zu Riefen, Eindrücken oder anderen Beschädigungen, welche die Oberfläche und damit die Laufeigenschaften des Sensors in der Nut beeinträchtigen. Zudem ist die Montage des Sensors durch die verschiedenen Bewegungsrichtungen, insbesondere durch den Kippvorgang und die Zuführung durch den im Vergleich zu dem Hauptnutbereich engen Nuthals aufwendig und kompliziert. Eine Montage quer zur Längsachse der Nut erscheint nur bei einer hohen Anzahl an Sensoren geeignet. Bei Komponenten wie Pneumatik- oder Hydraulikzylindern, in denen nur wenige Sensoren oder nur ein Sensor zum Einsatz kommen bzw. kommt, bietet diese Art der Zuführung keinen Vorteil.

Es ist daher die Aufgabe der vorliegenden Erfindung einen Sensor der vorstehend beschriebenen Art zu schaffen, bei der die Zuführung, die Montage, die Justage und Arretierung einfach zu handhaben ist und die Arretierung zuverlässig und ohne Beeinträchtigung der Lauffläche erfolgt.

Diese Aufgabe wird ausgehend von einem Sensor gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass die Mittel zur Fixierung des Sensors einen festen Basisbereich und einen demgegenüber federnden, elastisch verformbaren Bereich des Gehäuses und ein Verstellelement umfassen, wobei das Gehäuse durch Betätigung des nicht das Bauteil kontaktierenden Verstellelements und der daraus resultierenden elastischen Verformung des elastisch verformbaren Bereichs des Gehäuses in der Nut des Bauteils kraftschlüssig fixierbar ist.

Diese Lösung bietet den Vorteil, dass die Zuführung des Sensors im Wesentlichen in Längsrichtung der Nut erfolgt, wodurch eine einfache Handhabung des Sensors bei der Montage, Justage und Arretierung ermöglicht wird. Das Verstellelement kontaktiert nur den Sensor und beeinträchtigt damit nicht die Lauffläche der Nut bzw. des Bauteils, in der sich die Nut befindet. Durch die gewählte Krafteinwirkung wird die Klemmung nicht hauptsächlich über eine Krafteinwirkung auf die Nutschultern erreicht. Vielmehr wird die Klemmkraft zu einem kleineren Teil über die Nutschultern und zu einem größeren Teil über den Nutgrund übertragen. Hierdurch lässt sich eine zuverlässigere Arretierung erreichen.

Von besonderem Vorteil ist es, dass die Nut einen Hinterschnitt aufweist oder als T-Nut oder als Schwalbenschwanz-Nut ausgebildet ist. Auf diese Weise kann der Sensor beispielweise bei Überkopfarbeiten nach der Zufuhr und vor der Arretierung nicht aus der Nut fallen. T-Nuten und Schwalbenschwanz-Nuten stellen bei den Nuten mit Hinterschnitt die gängigsten Formen da und bieten so für nahezu alle Anwendungen eine standardisierte Lösung.

Eine die Erfindung verbessernden Maßnahme sieht vor, dass das Gehäuse einstückig ausgebildet ist und eine partielle Gehäuseteilung aufweist, welche den festen Basisbereich und den demgegenüber federnden, elastisch verformbaren Bereich definiert. Durch geeignete Wahl der Trennlinie für die partielle Gehäuseteilung lässt sich somit auf einfache Weise eine Aufteilung des Gehäuses in den festen Bereich und den verformbaren Bereich realisieren.

Eine weitere, die Erfindung verbessernde Maßnahme sieht vor, dass die partielle Gehäuseteilung so ausgebildet ist, dass diese in der Wandung zwischen dem Einbauraum des Gehäuses und der äußeren, der Lauffläche gegenüberliegenden Oberfläche des Gehäuses verläuft, so dass der Einbauraum des Gehäuses unverändert bleibt und somit ausreichend Einbauraum für den Sensor zur Verfügung steht.

Eine weiterführende Verbesserung ist es, dass durch die partielle Gehäuseteilung eine Art schmale, federnde Zunge entsteht, die mittels des Verstellelements relativ zu dem festen Basisteil bewegbar ist und so die kraftschlüssige Verbindung ermöglicht.

Eine weitere vorteilhafte Ausgestaltung ist es, dass die federnde Zunge eine Verdickung mit einer durchgängigen Öffnung zur Aufnahme des Verstellelements aufweist.
Aufgrund der geeigneten Verdickung wird der eher schmalen Zunge ausreichend Festigkeit für die Aufnahme des Verstellelements verliehen.

In gleicher Weise wird ein Vorteil dadurch realisiert, dass die partielle Gehäuseteilung eine Aufspreizung der Gehäusebereiche und somit eine kraftschlüssige Fixierung durch die Gehäuseverformung ermöglicht, wobei die Anordnung der Gehäuseteilung so ausgebildet ist, dass beim Aufspreizen der Gehäuseteilung sich das Gehäuse mit dem festen Basisbereich immer auf dem Nutgrund abstützt. Dadurch wird die Kraft nicht komplett auf die nur eine geringe Klemmfläche aufweisenden Nutschultern ausgeübt, sondern vielmehr auf verschiedene Bereiche verteilt, wodurch die Spannungskonzentration auf bestimmte Bereiche reduziert wird und damit die Lebensdauer deutlich ansteigt.

Eine vorteilhafte Weiterbildung ist es, dass als Verstellelement geeignete Mittel zur manuellen Einstellung eines Abstandes, beispielsweise Schrauben und Keile, zum Einsatz kommen, um so günstige Kräfteverhältnisse beim Betätigen des Verstellelements zu erzielen. Diese Elemente sind zudem einfach herzustellen und überwiegend standardisiert.

Darüber hinaus ist es vorteilhaft, dass das Verstellelement ein zusätzliches Mittel zur Arretierung aufweist, um damit das Verstellelement gegen eine ungewollte Positionsänderung und damit verbunden gegen eine Lösung des Sensors zu sichern. Es wird vorgeschlagen, dass diese Mittel als selbsthemmende Schraube ausgebildet sind. Auf diese Weise lässt sich die Arretierung einfach in das Verstellelement integrieren und es sind keine zusätzlichen Bauteile notwendig.

Weitere die Erfindung verbessernde Maßnahmen sind in den Unteransprüchen angegeben oder werden nachstehen gemeinsam mit der Beschreibung eines bevorzugten Ausführungsbeispiels der Erfindung anhand der Figuren näher dargestellt. Es zeigt:
- Fig. 1: eine Seitenansicht in Schnittdarstellung des Gehäuses eines Sensors,
- Fig. 2: eine Vorderansicht in Schnittdarstellung des Gehäuses gemäß Fig. 1 in einer Schwalbenschwanznut,
- Fig. 3: eine Vorderansicht in Schnittdarstellung des Gehäuses in einer T-Nut,
- Fig. 4: eine Seitenansicht in Schnittdarstellung einer anderen Ausführungsform des Gehäuses,
- Fig. 5: eine Seitenansicht des Gehäuses des Sensors nach Fig. 4, und
- Fig. 6: eine Vorderansicht in Schnittdarstellung eines Gehäuses des Sensors nach Fig.4 und Fig. 5 in einer T-Nut.

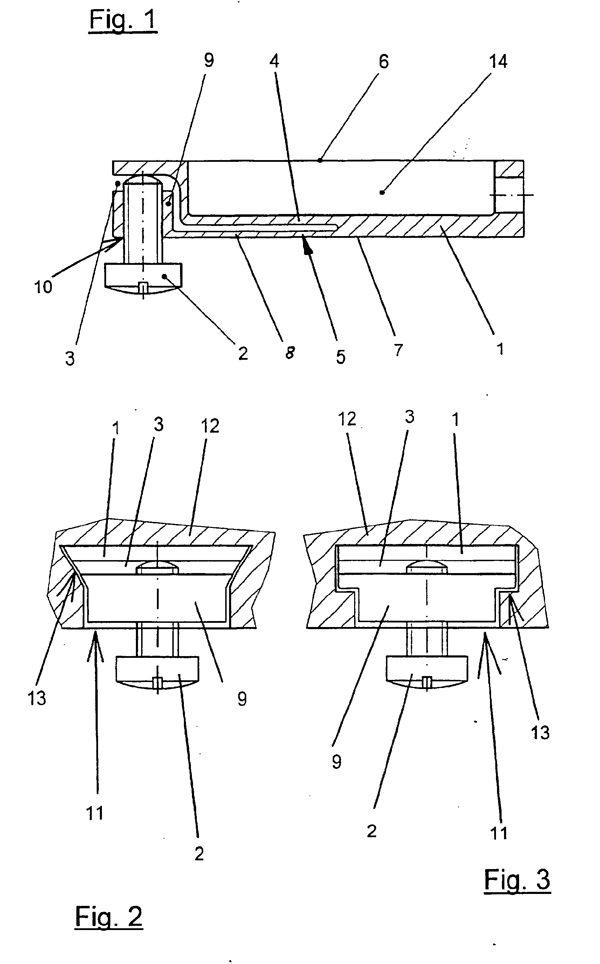

Der Sensor nach Fig. 1, genauer gesagt dessen Gehäuse 1 weist als Mittel zur Fixierung ein Verstellelement 2 auf. Das Gehäuse 1 ist durch eine partielle Gehäuseteilung 3 in zwei Bereiche aufgeteilt, einen festen Basisbereich 4 und einen sich hieran anschließenden federnden, elastisch verformbaren Bereich 5. Die partielle Gehäuseteilung 3 verläuft in Längsrichtung zwischen dem Basisbereich 4 und dem verformbaren Bereich 5 etwa bis zur Mitte des gesamten Gehäuses 1. Quer dazu verläuft die Teilung 3 über die gesamte Gehäusebreite. Der Basisbereich 4 weist eine Lauffläche 6 auf, mit der der Sensor bzw. dessen Gehäuse 1 auf dem Nutgrund aufliegt. Die der Lauffläche 6 gegenüberliegenden Oberfläche 7 des Gehäuses 1 ist als Gegenlager zu dem als Schraube ausgebildeten Verstellelement 2 ausgeformt. Der verformbare Bereich 5 ist im wesentlichen nach Art einer federnden Zunge 8 realisiert, welche in eine Verdickung 9 zur Aufnahme des als Schraube ausgebildeten Verstellelements 2 ausläuft. Durch die Verdickung 9 verläuft eine als Bohrung ausgeformte durchgängige Öffnung 10, in welcher die Schraube verstellbar gelagert ist. Zudem weist das Verstellelement 2 eine Arretiermöglichkeit auf, um ungewollte Positionsänderungen und damit ein ungewolltes Verstellen des Gehäuses 1 zu verhindern.

Vorliegend wird die Arretierung der Schraube durch die Selbsthemmung des Gewindes realisiert. Wird nun die Schraube bzw. das Verstellelement 2 entsprechend betätigt, wird der verformbare Bereich des Gehäuses 1 derartig verformt, dass Basisteil 4 und verformbarer Bereich 5 so aufgespreizt werden, dass der verformbare Bereich 5 vom Basisbereich 4 weg bewegt wird und das Gehäuse 1 so in einer Nut verklemmt wird.

Eine mögliche Ausformung einer Nut 11 in Verbindung mit dem Gehäuse 1 ist in Fig. 2 und in Fig. 3 dargestellt. Die Nut 11 nach Fig. 2 ist als Schwalbenschwanz ausgebildet und befindet sich in einem entsprechenden Bauteil 12. Entsprechend der Ausformung der Nut 11 als Schwalbenschwanz, sind auch die beiden Bereiche 4, 5 des Gehäuses 1 ausgebildet. Wichtig ist, dass die Gehäuseteilung des Gehäuses 1 entsprechend der Fixierrichtung des Verstellelements 2 angeordnet ist. In dem hier vorliegenden Fall ist die Fixierrichtung vertikal, d.h. die Gehäuseteilung muss so verlaufen, dass die durch die Verformung erzeugte Klemmung eine entsprechende Gegenfläche 13 aufweist. In Fig. 2 sind die Gegenflächen 13 die schrägen Flächen der Schwalbenschwanz-Nut. Bei Anziehen der Schraube wird der verformbare Bereich 5 des Gehäuses 1 einerseits gegen die Schräge gezogen. Aufgrund der Schräge erfolgt die Kraftübertragung nur anteilig gemäß dem Kräfteverhältnis an einer schiefen Ebene. In Fig. 3 erfolgt die Kraftübertragung komplett, d.h. die komplette Anzugskraft der Schraube kann als Klemmkraft beansprucht werden. Möglich ist das durch die Ausbildung der Nut 11 als T-Nut. Die Oberfläche des verformbaren Bereichs 5 wird hier rechtwinklig zu der Gegenfläche 13 der T-Nut gezogen.

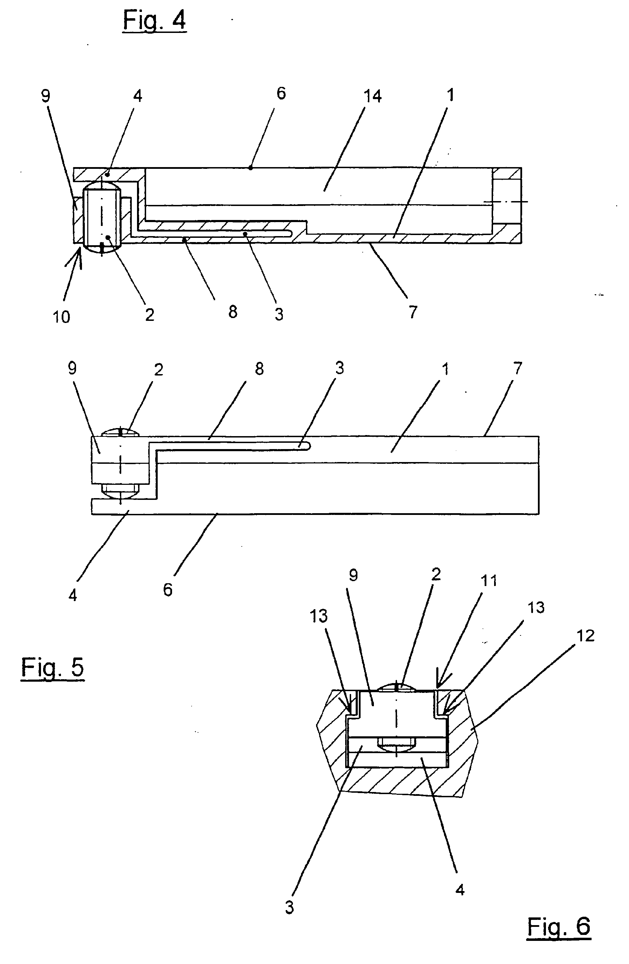

In Fig. 4 bis 6 ist ein leicht abgeändertes Gehäuse 1 mit einem ebenfalls variierten Verstellelement 2 dargestellt. Insbesondere ist hier das in Fig. 1 bis 3 als Schraube ausgebildete Verstellelement 2 nun als Stiftschraube ausgebildet. Hierbei steht das Verstellelement bei maximalem Verstellweg nicht über den verformbaren Bereich hinaus.

### Bezugszeichenliste

- **1**: (Sensor-)Gehäuse
- **2**: Verstellelement
- **3**: Gehäuseteilung
- **4**: Basisbereich
- **5**: verformbarer Bereich
- **6**: Lauffläche
- **7**: Oberfläche
- **8**: federnde Zunge
- **9**: Verdickung
- **10**: durchgängige Öffnung
- **11**: Nut
- **12**: Bauteil
- **13**: Gegenfläche

## Patentansprüche

1. Sensor mit Gehäuse (1) und Mitteln zur Fixierung des Gehäuses (1) in einer Nut (11) eines Bauteils (12), so dass das Gehäuse (1) *komplett* in der Nut (11) aufgenommen ist, wobei die Zuführung des Sensors im Wesentlichen in Längsrichtung der Nut (11) erfolgt, **dadurch gekennzeichnet,**
**dass** die Mittel zur Fixierung des Sensors einen festen Basisbereich (4) und einen demgegenüber federnden elastisch verformbaren Bereich (5) des Gehäuses (1) und ein Verstellelement (2) umfassen, wobei das Gehäuse (1) einstückig ausgebildet ist und eine partielle Gehäuseteilung (3) aufweist, welche den festen Basisbereich (4) und den federnden, elastisch verformbaren Bereich (5) definiert, so dass durch Betätigen des nicht das Bauteil (12) kontaktierenden Verstellelements (2) und der daraus resultierenden elastischen Verformung des elastisch verformbaren Bereichs (5) des Gehäuses (1) in der Nut (11) des Bauteils (12) kraftschlüssig fixierbar ist.

2. Sensor nach Anspruch 1,
**dadurch gekennzeichnet, dass** die Nut (11) mindestens einen Hinterschnitt aufweist oder als T-Nut oder als Schwalbenschwanz-Nut ausgebildet ist.

3. Sensor nach Anspruch 1,
**dadurch gekennzeichnet, dass** die partielle Gehäuseteilung (3) so ausgebildet ist, dass diese in der Wandung zwischen dem Einbauraum des Gehäuses (1) und der äußeren, der Lauffläche gegenüberliegenden Oberfläche des Gehäuses (1) verläuft, so dass der Einbauraum des Gehäuses (1) unverändert bleibt und somit ausreichend Einbauraum für den Sensor zur Verfügung steht.

4. Sensor nach einem der vorherigen Ansprüche,
**dadurch gekennzeichnet, dass** der elastisch verformbare Bereich (5) durch die partielle Gehäuseteilung (3) eine federnde Zunge (8) erzeugt, die mittels des Verstellelements (2) relativ zu dem festen Basisteil (4) bewegbar ist, um so die kraftschlüssige Verbindung zu ermöglichen.

5. Sensor nach einem der vorherigen Ansprüche,
**dadurch gekennzeichnet, dass** der elastisch verformbare Bereich (5) eine Verdickung (9) mit einer durchgängigen Öffnung (10) zur Aufnahme des Verstellelements (2) aufweist.

6. Sensor nach einem der vorherigen Ansprüche,
**dadurch gekennzeichnet, dass** die partielle Gehäuseteilung (3) eine Aufspreizung der Bereiche (4, 5) des Gehäuses (1) und somit eine kraftschlüssige Fixierung durch die Gehäuseverformung ermöglicht, wobei die Anordnung der Gehäuseteilung (3) so ausgebildet ist, dass beim Aufspreizen der Gehäuseteilung (3) sich das Gehäuse (1) mit dem festen Basisbereich (4) stets auf dem Nutgrund abstützt.

7. Sensor nach einem der vorherigen Ansprüche,
**dadurch gekennzeichnet, dass** als Verstellelement (2) Mittel zur manuellen Einstellung eines Abstandes vorgesehen sind.

8. Sensor nach Anspruch 7,
**dadurch gekennzeichnet, dass** das Verstellelement (2) weiterhin Mittel zur Arretierung aufweist, um das Verstellelement (2) gegen eine ungewollte Positionsänderung und damit gegen eine Lösung des Gehäuses (1) zu sichern.

9. Sensor nach Anspruch 8,
**dadurch gekennzeichnet, dass** die Mittel zur manuellen Einstellung eines Abstandes und gleichzeitigen Arretierung als selbsthemmende Schraube ausgebildet sind.

## Claims

1. A sensor with a housing (1) and means for fixing the housing (1) in a groove (11) of a component (12) so that the housing (1) is completely accommodated in the groove (11), wherein the sensor is essentially introduced in the longitudinal direction of the groove (11), **characterized in that**
the means for fixing the sensor comprise a fixed base section (4) and, with respect to the latter, a resiliently deformable section (5) of the housing (1), and an adjustment member (2), wherein the housing (1) is formed as an integral part and has a partial housing gap (3) which defines the fixed base section (4) and the resiliently deformable section (5) so that, by actuating said adjustment member not contacting said component (12) and due to the resilient deformation of the resiliently deformable section (5) of the housing (1), said housing (1) can be frictionally fixed in said groove (11) of said component (12).

2. The sensor according to claim 1,
**characterized in that** said groove (11) has at least one undercut or is configured as a T-slot or as a dovetail groove.

3. The sensor according to claim 1,
**characterized in that** the partial housing gap (3) is configured such that it extends within the thickness of the wall between the interior space of the housing (1) and the outer surface of the housing (1), opposite the sliding surface, so that the structural space of the housing (1) remains unchanged and so that sufficient structural space is available for the sensor.

4. The sensor according to any one of the preceding claims,
**characterized in that** due to the partial housing gap (3) the resiliently deformable section (5) creates a flexible blade (8) moveable relative to the fixed base section (4) by means of the adjustment member (2) to thus enable the frictional engagement.

5. The sensor according to any one of the preceding claims,
**characterized in that** the resiliently deformable section (5) has a thickened portion (9) with a through hole (10) for receiving the adjustment member (2).

6. The sensor according to any one of the preceding claims,
**characterized in that** the partial housing gap (3) enables splaying of the sections (4, 5) of the housing (1) and therefore frictional fixing by means of the housing deformation, wherein the arrangement of the housing gap (3) is such that when the housing gap (3) is splayed, the housing (1) always braces its fixed base section (4) against the bottom of the groove.

7. The sensor according to any one of the preceding claims,
**characterized in that** means for manually adjusting a distance are provided as said adjustment member (2).

8. The sensor according to claim 7,
**characterized in that** said adjustment member (2) further has means for locking in order to secure the adjustment member (2) against inadvertent positional change and therefore against loosening of the housing (1).

9. The sensor according to claim 8,
**characterized in that** the means for manually adjusting a distance and simultaneous locking are configured as a self-locking screw.

## Revendications

1. Capteur comprenant un boîtier (1) et des moyens pour fixer le boîtier (1) dans une rainure (11) d'un composant structurel (12) de telle façon que le boîtier (1) est complètement reçu dans la rainure (11), l'amenée du capteur ayant lieu essentiellement en direction longitudinale de la rainure (11), **caractérisé en ce que**
les moyens pour fixer le capteur comprennent une région de base ferme (4) et une région élastiquement déformable (5), présentant un effet de ressort par rapport à la région de base, du boîtier (1) et un élément de réglage (2), ledit boîtier (1) étant réalisé d'une seule pièce et présentant une subdivision partielle (3) du boîtier qui définit la région de base ferme (4) et la région élastiquement déformable à effet de ressort (5), de sorte que par actionnement de l'élément de réglage (2) qui ne vient pas en contact avec le composant structurel (12), et par la déformation élastique qui en résulte de la région élastiquement déformable (5) du boîtier (1) dans la rainure (11) du composant structurel (12), le boîtier peut être fixé par coopération de forces.

2. Capteur selon la revendication 1, **caractérisé en ce que** la rainure (11) présente au moins une contre-dépouille, ou bien est réalisée sous forme de rainure en T ou de rainure en queue d'aronde.

3. Capteur selon la revendication 1, **caractérisé en ce que** la subdivision partielle (3) du boîtier est ainsi réalisée que celle-ci s'étend dans la paroi entre la chambre intérieure du boîtier (1) et la surface extérieure, opposée à la surface de coulissement, du boîtier (1), de sorte que la chambre intérieure du boîtier (1) reste sans modification, et que l'on dispose ainsi d'un espace de montage suffisant pour le capteur.

4. Capteur selon l'une des revendications précédentes, **caractérisé en ce que** la région élastiquement déformable (5) engendre, du fait de la subdivision partielle (3) du boîtier, une languette à effet ressort (8), laquelle est mobile par rapport à la partie de base ferme (4) au moyen de l'élément de réglage (2) pour permettre ainsi la liaison par coopération de forces.

5. Capteur selon l'une des revendications précédentes, **caractérisé en ce que** la région élastiquement déformable (5) comporte un épaississement (9) avec une ouverture traversante (10) pour recevoir l'élément de réglage (2).

6. Capteur selon l'une des revendications précédentes, **caractérisé en ce que** la subdivision partielle (3) du boîtier rend possible un écartement des régions (4, 5) du boîtier (1) et ainsi une fixation par coopération de forces du fait de la déformation du boîtier, l'agencement de la subdivision (3) du boîtier étant ainsi réalisé que lors de l'écartement de la subdivision (3) du boîtier, le boîtier (1) s'appuie constamment au fond de la rainure au moyen de la région de base ferme (4).

7. Capteur selon l'une des revendications précédentes, **caractérisé en ce qu'**il est prévu, à titre d'élément de réglage (2), des moyens pour le réglage manuel d'une distance.

8. Capteur selon la revendication 7, **caractérisé en ce que** l'élément de réglage (2) comprend en outre des moyens d'arrêt, pour bloquer l'élément de réglage (2) à l'encontre d'une modification de position non voulue et ainsi à l'encontre d'un détachement du boîtier (1).

9. Capteur selon la revendication 8, **caractérisé en ce que** les moyens pour le réglage manuel d'une distance et simultanément les moyens d'arrêt sont réalisés comme une vis à auto freinage.
